# EUROPEAN PATENT APPLICATION

(11) **EP 2 698 904 A1**
(43) Date of publication of application: **19.02.2014**
(21) Application number: 12771671.0
(22) Date of filing: 12.04.2012
(51) Int. Cl.: H02K 5/22

(54) **ELECTRIC MOTOR**

(30) Priority: 14.04.2011 JP 2011090214
(71) Applicant: Hitachi Construction Machinery Co., Ltd., Bunkyo-ku Tokyo 112-8563 (JP)
(72) Inventor: OKUMURA Shinya, Tsuchiura-shi Ibaraki 300-0013 (JP); SATAKE Hidetoshi, Tsuchiura-shi Ibaraki 300-0013 (JP); OJIMA Mitsugu, Tsuchiura-shi Ibaraki 300-0013 (JP)
(74) Representative: Beetz & Partner
(86) International application number: PCT/JP2012/060038
(87) International publication number: WO 2012/141253

(57) **Abstract**

To provide an electric motor that can reduce the labor of its installation work.

An electric motor is provided with a motor casing (2) with an armature accommodated therein, a flange (3) formed projecting in a rim shape on an outer side wall of the motor casing (2) and provided with plural portions where the flange can be fastened by screws, a conductive part (30) electrically connected to the armature, arranged exposed on the outer side wall of the motor casing (2) and located on a side of a centerline (O) of the motor casing (2) relative to the portions of the flange (3) where the flange can be fastened by the screws, an electric wire (20) having a terminal (21) at an end thereof, electrically connected at a position of the terminal (21) to the conductive part (30) and connected at an opposite end thereof to a power supply, and a cover member (10) detachably attached to the outer side wall of themotorcasing (2) while covering the terminal (21) and conductive part (30) which are in an electrically connected state.

## Description

### Technical Field

This invention relates to an electric motor provided with a flange.

### Background Art

Conventionally, an electric motor is provided with a motor casing with an armature accommodated therein and a terminal box arranged protruding on an outer side wall of the motor casing. The connection of the terminal box and a power supply enables to feed electric power to the electricmotor. The terminal box is provided with a terminal block and a lid section. The terminal block is provided with plural conductive parts to which electric wires are electrically connected, respectively, by being fastened with screws, and is attached to the outer side wall of the motor casing by being fastened with screws. The plural conductive parts are comprised of three motor-side conductive parts and three power supply-side conductive parts. To the motor-side conductive parts, plural electric wires which extend from the motor casing (hereinafter called "the motor-side electric wires") are connected. To the power supply-side conductive parts, electric wires which extend from the power supply (hereinafter called "the power supply-side electric wires") are connected. The lid section is attached to the terminal block while covering the motor-side conductive parts and power supply-side conductive parts.

### Prior Art Document

### Patent Document

Patent Document 1: JP-A-7-42554 U

### Disclosure of the Invention

### Problem to Be Solved by the Invention

Electric motors, each provided with a flange, also conventionally exist in common, although the above-mentioned conventional electric motor is not provided with a flange. The flange is arranged projecting in a rim shape from an outer side wall of a motor casing. At an installation location, the electric motor provided with the flange is fastened at the position of the flange by screws. The electric motor provided with the flange is also provided with a terminal box arranged protruding on the outer side wall of the motor casing. As the terminal box protrudes from the outer side wall of the motor casing, the terminal box interferes with the fastening of the flange by the screws in the installation work of the electric motor when at least one portion of the flange, where the flange can be fastened by a screw, is located at a position where the flange overlaps with the terminal box as viewed in the direction of an axis of the motor casing. In this case, the fastening of the flange to the installation location by the screws is performed with the terminal box detached.

In the installation work of the electric motor, the connection work of electric wires is also performed. This connection work includes, either before or after the attachment of the terminal block to the motor casing, connecting the motor-side electric wires to the three motor-side conductive parts of the terminal block, said motor-side conductive parts being connected to the armature in the motor casing, respectively, and connecting the power supply-side electric wires, which are to be connected to a power supply outside the electric motor, to the three power supply-side conductive parts, respectively. Even the connection work of electric wires at such six locations may become irksome when working performance is restricted due to a narrow work space as in the engine compartment or the like of a construction machine.

With the above-mentioned circumstances in view, the present invention has as an object thereof the provision of an electric motor that can reduce the labor of its installation work.

### Means for Solving the Problem

To achieve the above-mentioned object, an electric motor according to the present invention is constructed as will be described next.

[1] The electric motor according to the present invention comprises a motor casing with an armature accommodated therein, a flange formed projecting in a rim shape on an outer side wall of the motor casing, and provided with plural portions where the flange can be fastened by screws, a conductive part electrically connected to the armature, arranged exposed on the outer side wall of the motor casing, and located on a side of a centerline of the motor casing relative to the portions of the flange where the flange can be fastened by the screws, an electric wire having a terminal at an end thereof, electrically connected at a position of the terminal to the conductive part, and connected at an opposite end thereof to a power supply, and a cover member detachably attached to the outer side wall of the motor casing while covering the terminal and conductive part which are in an electrically connected state.

In the installation work of the electric motor described above in [1], the motor casing is brought into a state with the cover member detached, and in this state, the flange is fastened to an installation location by screws. Subsequently, the terminal of the electric wire is electrically connected to the conductive part, and the cover member is attached to the outer side wall of the motor casing.

In the electric motor described above in [1], the conductive part is located on the side of the centerline of the motor casing relative to the portions of the flange where the flange can be fastened by the screws. In the state that the cover member has been detached from the motor casing, the conductive part, therefore, does not interfere with the fastening of the flange to the installation location by the screws.

Especially owing to the arrangement of the conductive part, which is electrically connected to the armature, on the outer side wall of the motor casing in the electric motor described above in [1], the wire connection work upon installation of the electric motor is only to connect the terminal of the electric wire, which is to be connected to the power supply outside the electric motor, to the conductive part. Unlike the case of the above-mentioned conventional electric motor, the electric motor described above in [1], therefore, does not need the labor to connect the motor-side electric wire, which is connected to the armature in the motor casing, to the motor-side contact part on the terminal block. Therefore, the above-described electric motor can reduce the labor of installation work.

[2] The electric motor according to the present invention may be characterized in that in the electric motor described above in [1], the cover member is provided with a wire attachment means for holding the electric wire in place while assuring air tightness of the cover member and positioning the terminal of the electric wire to come into contact with the conducive part in a state that the cover member is attached to the outer side wall of the motor casing, and also with a pressing means for normally pressing the terminal of the electric wire against the conductive part in the state that the cover member is attached to the outer side wall of the motor casing, and the pressing means is provided with a contact portion located with the terminal held between the contact portion and the conductive part in the state that the cover member is attached to the outer side wall of the motor casing, and also with a resilient portion fixed at an end thereof on the contact portion and at an opposite end thereof on the cover member for normally pressing the contact portion against the terminal by resilient force.

In the installation work of the electric motor described above in [2], the motor casing is brought into a state with the cover member detached, and in this state, the flange is fastened to the installation location by screws. The electric wire is next attached to the cover member by the wire attachment means, and the cover member is then attached to the outer side wall of the motor casing.

In the electric motor described above in [2], with the cover member being attached to the outer side wall of the motor casing, the wire attachment means positions the terminal of the electric wire such that the terminal comes into contact with the conductive part, the contact portion of the pressing means is located with the terminal being held between the contact portion of the pressing means and the conductive part, and the resilient portion normally presses the contact portion against the terminal by resilient force. At the same time as the cover member is attached to the outer side wall of the motor casing, it is, therefore, possible to position the terminal of the electric wire relative to the conductive part and also to connect the electric wire to the conductive part. As a consequence, the above-described electric motor can reduce the labor of installation work.

Incidentally, it is essential for an electric motor, which is to be arranged on a construction machine, to provide its cover member with dustproofness and waterproofness. The cover member, therefore, requires air tightness. To bring a terminal of an electric wire into a state that the terminal is covered by the cover member attached to a motor casing, a construction can be adopted, for example, to arrange the terminal inside the cover member, for example, by providing the cover member with a hole and inserting the electric wire through the hole. However, the mere insertion of the electric wire through the hole of the cover member leaves a clearance between the electric wire and the inner wall of the hole so that no air tightness can be assured for the cover member. It is, therefore, necessary to attach the electric wire to the cover member by using the wire attachment means which may include a seal member such as an O-ring to fill out the clearance between the electric wire and the inner wall of the hole. In the electric motor described above in [2], the terminal is positioned relative to the conductive part by making use of the fixing of the electric wire on the cover member with such a wire attachment means. As a consequence, the labor of installation work can be reduced with respect to an electric motor which is required to assure air tightness at a portion of the cover member where the electric wire is inserted.

### Advantageous Effects of the Invention

According to the electric motor of the present invention, the labor of installation work can be reduced as mentioned above.

### Brief Description of the Drawings

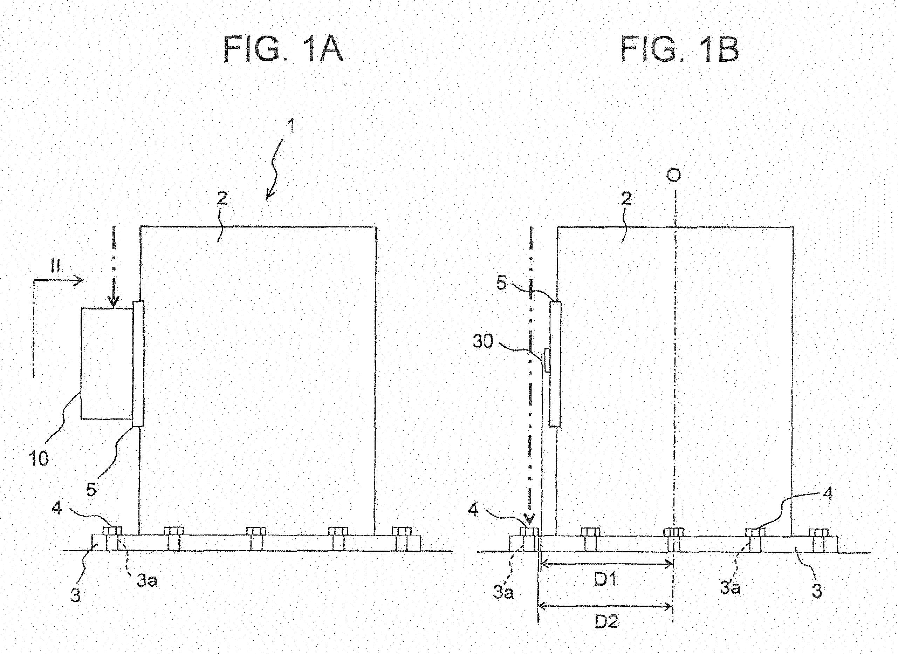

FIGS. 1A and 1B are side views showing the outline of an external appearance of an electric motor according to a first embodiment of the present invention, in which
FIG. 1A shows a state with a cover member attached to a motor casing and FIG. 1B shows a state with the cover member detached from the motor casing.
FIG. 2 is a view of the cover member of FIG. 1 as viewed in a direction of arrow II.
FIG. 3 is a cross-sectional view of the cover member and the like taken along III-III of FIG. 2.
FIG. 4 shows the cover member of FIG. 3 with a lid section detached from the cover member.
FIG. 5 shows the cover member cut off along line V-V of FIG. 3.
FIG. 6 corresponds to FIG. 2, but illustrates a cover member arranged in an electric motor according to a second embodiment of the present invention.
FIG. 7 corresponds to FIG. 3, but illustrates the electric motor according to the second embodiment.
FIG. 8 corresponds to FIG. 4, but illustrates the cover member of FIG. 7 with the lid section detached.
FIG. 9 corresponds to FIG. 5, but illustrates the cover member of FIG. 7 cut off along line IX-IX.
FIG. 10A and 10B depict modifications of a conductive part and contact portion in the second embodiment, in which FIG. 10A depicts a first modification and FIG. 10B depicts a second modification.
FIG. 11 corresponds to FIG. 7, but depicts a modification of the cover member in the second embodiment.
FIG. 12 corresponds to FIG. 8, but depicts the modification of FIG. 11 with the cover member detached from the motor casing.

### Modes for Carrying out the Invention

A description will be made about electric motors according to a first and second embodiment of the present invention.

### [First Embodiment]

With reference to FIG. 1 through FIG. 5, a description will be made about the electric motor according to the first embodiment.

As shown in FIG. 1A, the electric motor 1 according to the first embodiment is provided with a motor casing 2 made of an aluminum alloy and a flange 3 formed projecting in a rim shape from an outer side wall of the motor casing 2 and having mounting holes 3 for being fastened by screws. Accommodated in the motor casing 2 is an armature (not shown) that rotates when fed with electric power. The flange 3 is fastened to an installation location by the bolts 4.

On the outer side wall of the motor casing 2, a cover member 10 made of an aluminum alloy is attached protruding from the outer side wall. In a state that the cover member 10 has been attached to the motor casing 2, a portion of the flange 3, where the flange 3 is fastened by a screw, is located at a position where the flange 3 overlaps with the cover member 10 as viewed in the direction of an axis of the motor casing 2. When it is desired to screw or unscrew the bolt 4 from above at the portion, the bolt 4 is hardly screwed or unscrewed because of the cover member 10 lying in the way as indicated by an arrow of two-dot chain line in FIG. 1A. In a state that the cover member 10 has been detached from the motor casing 2, on the other hand, the bolt 4 can be easily screwed or unscrewed from above as shown by an arrow of two-dot chain line in FIG. 1B.

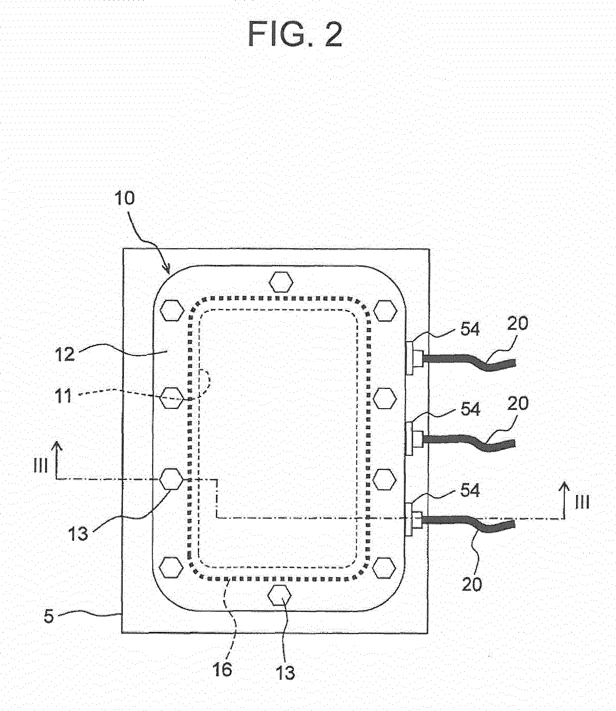

As shown in FIGS. 1A and 1B, an attachment base 5 is arranged protruding on the outer side wall of the motor casing 2. As shown in FIG. 2, the cover member 10 is detachably attached to the attachment base 5 by being fastened with bolts 13.

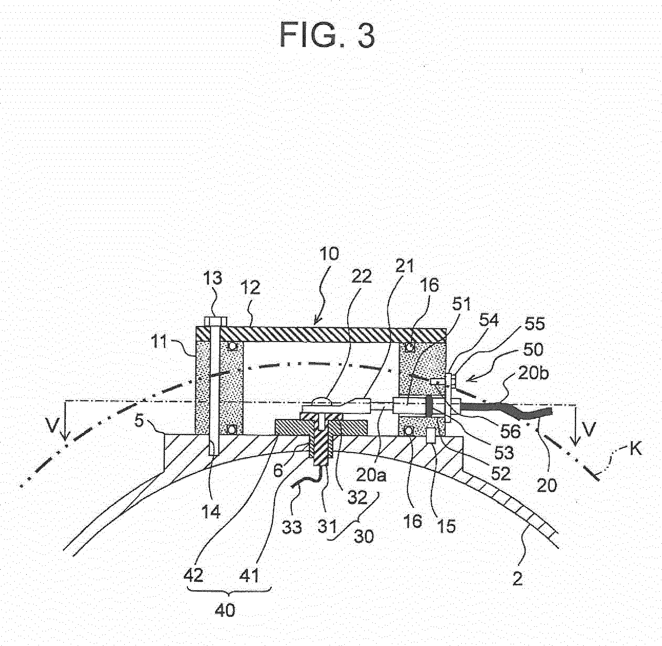

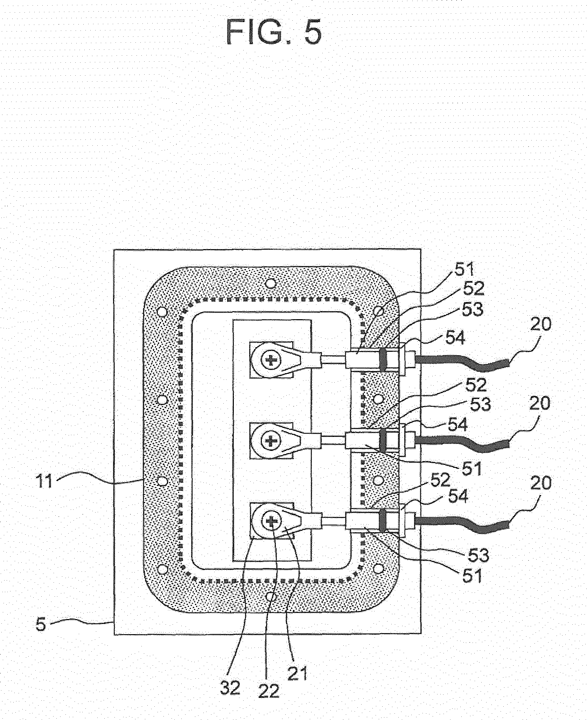

As shown in FIGS. 3 and 5, three conductive parts 30 which are electrically connected to the armature are arranged exposed on the attachment base 5. Each wire 20 is provided at an end thereof with a terminal 21. This terminal 21 has been fastened in contact with the corresponding conductive part 30 by a connection screw 22, and is hence electrically connected to the conductive part 30. The wire 20 is connected at an opposite end thereof to a power supply (not shown).

It is to be noted that in FIG. 1B, a distance D1 is a distance from a centerline O of the motor casing 2 to a surface of each conductive part 30 in contact with which the corresponding terminal 21 is arranged while a distance D2 is a distance from the centerline O of the motor casing 2 to the above-described portion of the flange 3, where the flange 3 is fastened by the screw, (a head of the bolt 4). As can be envisaged from a comparison of these distances, the conductive part 30 is located on a side of the centerline O of the motor casing 2 relative to the above-described portion of the flange 3, where the flange 3 is fastened by the screw, (a head of the bolt 4). Further, a circular arc K of two-dot chain line in FIG. 3 is a phantom line drawn by connecting the centers of plural ones of the mounting holes 3a.

As shown in FIG. 3, each conductive part 30 is provided with a conductive, solid cylinder portion 31 and a contact plate portion 32. The conductive, solid cylinder portion 31 is arranged on an end of an electric wire 33 connected to the armature (not shown) in the motor casing 2, and is electrically connected to the electric wire 33. The contact plate portion 32 is formed in a disc shape at an end of the conductive, solid cylinder portion 31. The terminal 21 is arranged in contact with the contact plate portion 32.

The attachment base 5 of the motor casing 2 is also provided with wiring holes 6. In each wiring hole 6, the conductive, solid cylinder portion 31 of the corresponding conductive part 30 is inserted. In each wiring hole 6, a seal member 40 formed of an insulating member is also inserted. This seal member 4 is provided with an insulating tube portion 41 and an insulating plate portion 42. In the wiring hole 6, the insulating tube portion 41 is located on a side of an outer periphery of the conductive, solid cylinder portion 31 to fill out a clearance between the conductive, solid cylinder portion 31 and an inner wall of the wiring hole 6. The insulating plate portion 42 is formed in a disc shape at an end of the insulating tube portion 41, and is located between the attachment base 5 and the conductive part 30. At the position of each wiring hole 6, the corresponding seal member 40, therefore, electrically insulates the motor casing 2 made of the aluminum alloy and the conductive part 30 from each other while assuring the air tightness of the motor casing 2.

As shown in FIGS . 3 and 4, the cover member 10 is provided with a cylinder section 11 and a lid section 12. The cylinder section 11 is fastened at one side thereof, as viewed in the direction of extension of the bolts 13, in contact with the attachment base 5 by the bolts 13. In FIG. 3, numeral 14 indicates an internally threaded portion with which one of the bolts 13 is threadedly engaged, and numeral 15 designates a positioning pin for positioning the cylinder section 11 relative to the attachment base 5. The lid section 12 is fastened together with the cylinder section 11 by the bolts 13 and is fixed on the attachment base 5. As can be appreciated by observing FIGS. 2, 3 and 5, the cover member 10 is attached to the outer side wall of the motor casing 2 while covering the terminals 21 of the respective wires 20 and the corresponding conducive parts 30 in a mutually connected state. Seal members 16 are arranged in a round cornered rectangular shape at an end portion of the cylinder section 11, said end portion being on a side of the attachment base 5, and an end portion of the cylinder section 11, said end portion being on a side of the lid section 12, respectively.

The cover member 10 is provided with wire attachment means 50 for holding the corresponding electric wires 20 and positioning the terminals 21 of the electric wires 20 in contact with the conductive parts 30 while assuring the air tightness of the cover member 10. Each wire attachment means 50 is provided with an insulating tube 51 covering the electric wire 20 at a portion thereof attached to the cylinder section 11, a wiring hole 52 arranged through the cylinder section 11 and provided with the tube 51 inserted therein, an O-ring 53 fitted on an outer peripheral wall of the tube 51 and filling out a clearance between the tube 51 and an inner wall of the wiring hole 52, a fixing plate 54 arranged on an end portion of the tube 51, said end portion being on a side opposite to an end portion thereof on a side of the terminal 21, and located along an outer peripheral wall of the cylinder section 11, anda screw 55 and internally threaded portion 56 fastening the fixing plate 54 on the outer peripheral wall of the cylinder section 11. It is to be noted that each electric wire 20 is provided with a conductor (not shown) to which the corresponding terminal 21 is electrically connected, an inner sheath 20a covering an outer peripheral surface of the conductor, and an outer sheath 20b covering an outer peripheral surface of the inner sheath 20a.

The electric motor 1 according to the first embodiment constructed as described above is installed as will be described next.

In the installation work of the electric motor 1 according to the first embodiment, the motor casing 2 is brought into a state with the cover member 10 (the cylinder section 11 and lid section 12) detached, and in this state, the flange 3 is fastened to the installation location by bolts (see FIG. 1B). During this time or after that, the electric wires 20 are attached to the cylinder section 11 of the cover member 10 by the wire attachment means 50.

The seal members 16 are next fitted to the end portion of the cylinder section 11, said end portion being on the side of the attachment base 5, and the opposite end portion of the cylinder section 11, respectively, and the cylinder section 11 is positioned on the attachment base 5 by the positioning pin 15. At this time, the terminals 21 of the electric wires 20 are arranged in contact with the contact plate portions 32 of the corresponding conductive parts 30.

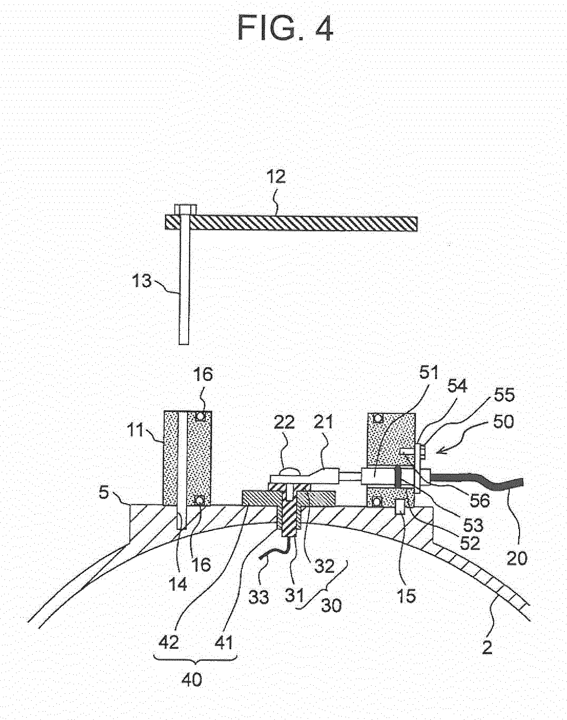

While maintaining the cylinder section 11 in the positioned state, the terminal 21 of each electric wire 20 is next fastened to the contact plate portion 32 of the corresponding conductive part 30 by the connection screw 22 (see FIG. 4).

The lid section 12 is next arranged on the end portion of the cylinder section 11, said end portion being on the side opposite to the end portion on the side of the attachment base 5, and these cylinder section 11 and lid section 12 are fastened together are attached to the attachment base 5 by the bolts 13. The installation of the electric motor 1 according to the first embodiment has now been completed.

According to the electric motor 1 of the first embodiment, the following advantageous effects can be obtained.

In the electric motor 1 according to the first embodiment, each conductive part 30 is located on the side of the centerline O of the motor casing 2 relative to the portions of the flange 3, where the flange 3 is screwed or unscrewed, (the heads of the bolts 4). As a consequence, the conductive parts 30 do not hinder a worker upon fastening the flange 3 to the installation location by the screws.

In the electric motor 1 according to the first embodiment, the conductive parts 30 which are electrically connected to the armature in the motor casing 2 are arranged on the outer side wall of the motor casing 2. The connection work for the electric wires upon installation of the electric motor 1 is, therefore, only to connect the terminals 21 of the electric wires 20, which are to be connected to the power supply outside the electric motor, to the corresponding conductive parts 30. Unlike the case of the above-mentioned conventional electric motor, no labor is, therefore, needed to connect the motor-side electric wires, which are connected to the armature in the motor casing, to the corresponding motor-side conductive parts on the terminal block. It is, accordingly, possible to reduce the labor of installation work of an electric motor.

In the electric motor 1 according to the first embodiment, each wire attachment means 50 performs positioning such that the terminal 21 of the electric wire 20 comes into contact with the conductive part 30, with the cylinder section 11 of the cover member 10 being attached to the outer side wall of motor casing 2. Accordingly, the positioning of the terminals 21 of the respective electric wires 20 relative to the corresponding conductive parts 30 is completed at the same time as the cylinder section 11 of the cover member 10 is attached to the outer side wall of the motor casing 2. This can also reduce the labor of installation work for the electric motor 1.

### [Second Embodiment]

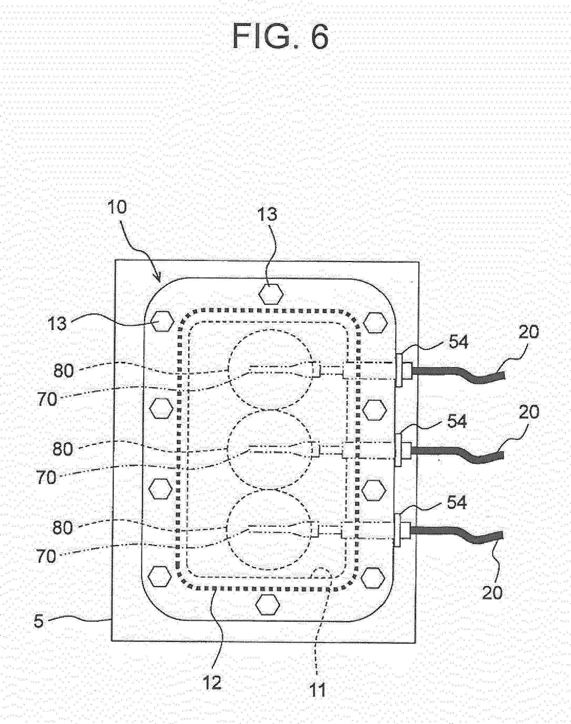

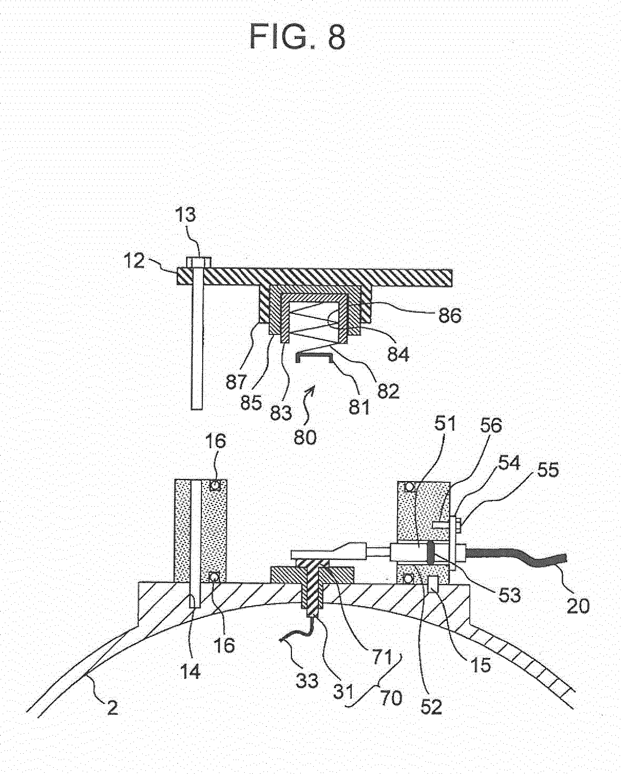

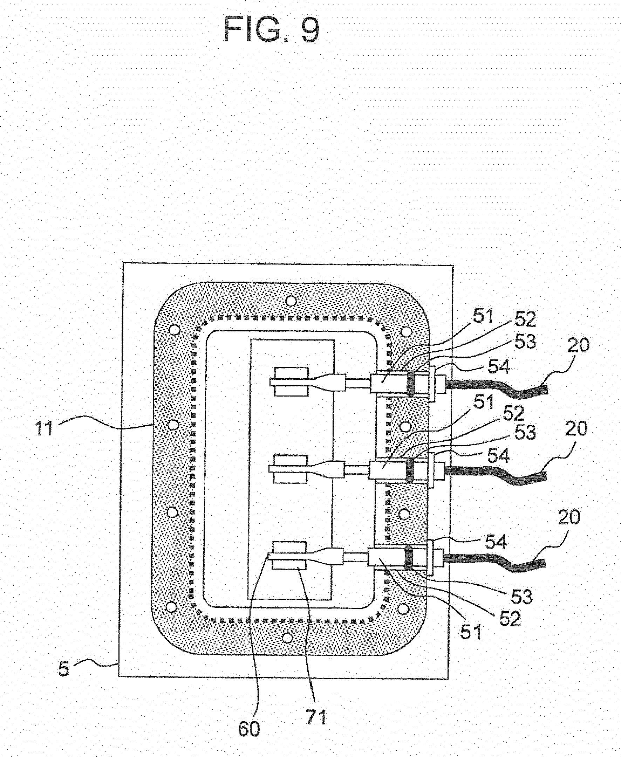

With reference to FIG. 6 through FIG. 12, a description will be made about the electric motor according to the second embodiment. Among elements of structure illustrated or depicted in these FIG. 6 through FIG. 12, those equivalent to the corresponding ones shown in FIG. 1 through FIG. 5 are designated by like reference numerals.

The electric motor according to the second embodiment is provided with terminals 60, conductive parts 70 and pressing means 80 in place of the terminals 21, conductive parts 30 and connection screws 22 in the electric motor according to the first embodiment. The remaining construction of the electric motor according to the second embodiment is the same as that of the electric motor according to the first embodiment.

Each terminal 60 and the contact plate portion 71 of the corresponding conductive part 70 do not have structures for being fastened by a screw. The electrical connection of the terminal 60 to the conductive part 70 is realized such that the corresponding pressing means 80 normally presses the terminal 60 against the contact plate portion 71 of the conductive part 70 with the cover member 10 being attached to the outer side wall of the motor casing 2. A description will next be made specifically about the pressing means 80.

The pressing means 80 is provided with a contact portion 81 located with the terminal 60 being held between the contact portion 81 and the conductive part 70 in the state that the cover member 10 (the cylinder section 11 and lid section 12) is attached to the outer side wall of the motor casing 2. The spring means 80 is also provided with a coil spring 82 as a resilient portion for normally pressing the contact portion 81 against the terminal 60 by resilient force.

An end of the coil spring 82 is located on the side of the attachment base 5, and an opposite end of the coil spring 82, said opposite end being on a side opposite to the first-mentioned end, is located on the side of the lid section 12. The contact portion 81 is fixed on the first-mentioned end of the coil spring 82. The coil spring 82 is inserted in a spring guide member 83 such that the direction of its resilient deformation becomes linear in an axial direction. The spring guide member 83 is a metal-made member, and has a bottomed guide bore 84 recessed in a direction away from the attachment base 5. In this guide bore 84, the coil spring 82 has been inserted with the opposite end thereof being as a leading end. The coil spring 82 is restricted in radial movement by an inner peripheral wall of the guide bore 84. As a consequence, the direction of resilient deformation of the coil spring 82 is restricted to the axial direction of the coil spring 82 so that the contact portion 81 moves away from and toward the lid section 12.

Between the spring guide member 83 and the lid section 12, an insulating member 85 is interposed. Formed in this insulating member 85 is a fitting bore 86 which is recessed in a direction away from the attachment base 5. The spring guide member 83 is fitted in the fitting bore 86 such that it can be hardly pulled out. A fitting frame 87 is formed protruding on a surface of the lid section 12, said surface being on the side of the attachment base 5, and the insulating member 85 is fitted in the fitting frame 87 such that it can be hardly pulled out. Therefore, the opposite end of the coil spring 82 is fixed on the lid section 12 via the spring guide member 83 and insulating member 85.

The electric motor according to the second embodiment constructed as described above is installed as will be described next.

In the installation work of the electric motor according to the second embodiment, the motor casing 2 is brought into a state with the cover member 10 (the cylinder section 11 and lid section 12) detached, and in this state, the flange 3 is fastened to an installation location by bolts (see FIG. 1B). During this time or after that, the electric wires 20 are attached to the cylinder section 11 of the cover member 10 by the wire attachment means 50.

The seal members 16 are next fitted to the end portion of the cylinder section 11, said end portion being on the side of the attachment base 5, and the end portion of the cylinder section 11, said end portion being on the side of the lid section 12, respectively, and the cylinder section 11 is positioned on the attachment base 5 by the positioning pin 15. At this time, the terminals 60 of the electric wires 20 are arranged in contact with the contact plate portions 32 of the corresponding conductive parts 70.

While maintaining the cylinder section 11 in the positioned state, the lid section 12 is next arranged on the end portion of the cylinder section 11, said end portion being on the side opposite to the end portion on the side of the attachment base 5. At this time, the contact portion 81 of each pressing means 80 is pressed against the corresponding terminal 60 in opposition to the resilient force in extending direction of the coil spring 82. As a consequence, the terminal 60 is pressed against the contact plate portion 32 of the corresponding conductive part 70.

These cylinder section 11 and lid section 12 are next fastened together and attached to the attachment base 5 by the bolts 13. The installation of the electric motor according to the second embodiment has now been completed.

According to the electric motor 1 of the second embodiment, the following advantageous effects can be obtained.

In the electric motor according to the second embodiment, each conductive part 70 is also located on the side of the centerline O of the motor casing 2 relative to the portions of the flange 3, where the flange 3 is screwed or unscrewed, (the heads of the bolts 4) as in the electric motor according to the first embodiment. As a consequence, the conductive parts 70 do not hinder a worker upon fastening the flange 3 to the installation location by the bolts.

In the electric motor according to the second embodiment, the conductive parts 70 which are electrically connected to the armature in the motor casing 2 are also arranged on the outer side wall of the motor casing 2 as in the electric motor 1 according to the first embodiment. The connection work for the electric wires upon installation of the electric motor 1 is, therefore, only to connect the terminals 60 of the electric wires 20, which are to be connected to the power supply, to the corresponding conductive parts 70. Unlike the case of the above-mentioned conventional electric motor, no labor is, therefore, needed to connect the motor-side electric wires, which are connected to the armature in the motor casing, to the corresponding motor-side conductive parts on the terminal block. It is, accordingly, possible to reduce the labor of installation work of an electric motor.

In the electric motor according to the second embodiment, each wire attachment means 50 performs positioning such that the terminal 60 of the electric wire 20 comes into contact with the conductive part 70 with the cover member 10 being attached to the outer side wall of motor casing 2, the contact portion 81 of the corresponding pressing means 80 is located with the terminal 60 being held between the contact portion 81 and the conductive part 70, and the coil spring 82 (resilient portion) normally presses the contact portion 81 against the terminal 60 by resilient force. Accordingly, the terminals 60 of the respective electric wires 20 can be positioned relative to the corresponding conductive parts 70 at the same time as the cylinder section 11 of the cover member 10 is attached to the outer side wall of the motor casing 2, or the wires 20 can be connected to the conductive parts 70, respectively, at the same time as the lid section 12 of the cover member 10 is attached to the cylinder section 11. This can also reduce the labor of installation work for the electric motor 1.

In the electric motor according to the second embodiment, the terminals 60 are positioned relative to the corresponding conductive parts 70 by making use of the fixing of the electric wires 20 to the cover member 10 with the wire attachment means 50. As a consequence, the labor of installation work can be reduced in connection with an electric motor required to assure air tightness at portions of the cover member 10, where the electric wires 20 are inserted, for example, an electric motor to be mounted on a construction machine.

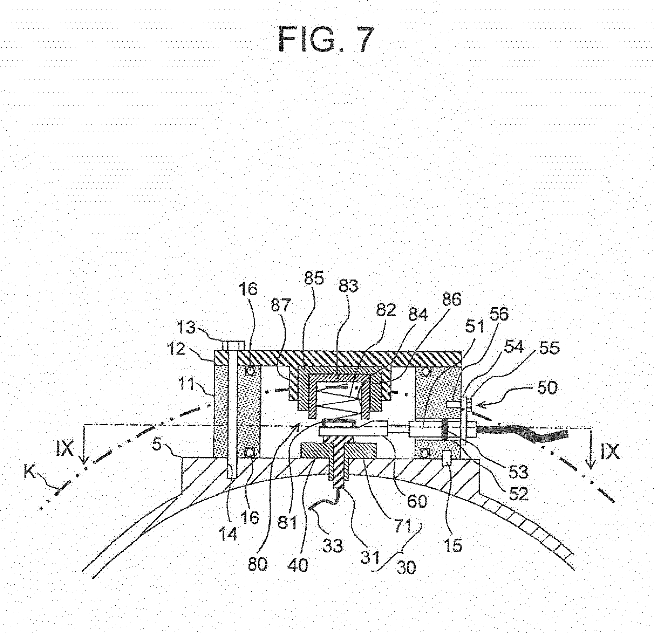

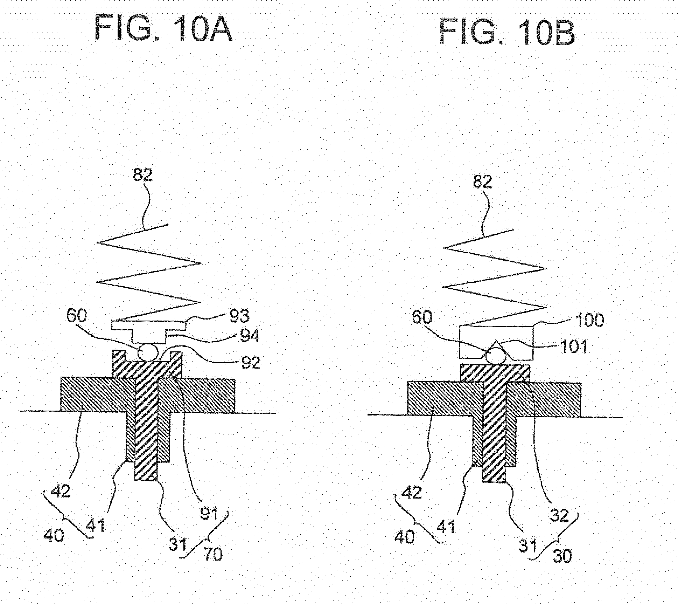

In the above-described electric motor according to the second embodiment, each conductive part 70 and its corresponding contact portion 81 are constructed such that the corresponding terminal 60 is simply pressed against the contact plate portion 32 of the conductive part 70 as illustrated in FIG. 7. These conductive part 70 and contact portion 81 may, however, be constructed like modifications depicted in FIGS. 10A and 10B, respectively. According to these modifications, it is possible to realize electric motors having higher stability in the state of contact of the terminals 60 to the conductive parts 70 than the electric motor according to the second embodiment. A description will next be made about the modifications depicted in FIGS. 10A and 10B, respectively.

In the modification depicted in FIG. 10A, numeral 91 is a contact plate portion of a conductive part 70, and numeral 93 designates a contact portion. This contact plate portion 91 has a concave portion 92 recessed in a direction away from the contact portion 93, and the contact portion 93 has a convex portion 94 extending in a direction toward the contact plate portion 91. With the terminal 60 being in contact with the contact plate portion 91 of the conducive part 70 in the concave portion 92, in other words, with sliding motions of the terminal 60 relative to the contact plate portion 91 being restricted to the inside of the concave portion 92, the terminal 60 is pressed against a bottom wall of the concave portion 92 of the contact plate portion 91 by the convex portion 94 of the contact portion 93. As a consequence, the state of contact of the terminal 60 to the conductive part 70 has been improved in stability.

In the modification depicted in FIG. 10B, numeral 100 designates a contact portion. This contact portion 100 is provided in a surface thereof, said surface being on the side of the conductive part 70, with a restricting groove 101 of a triangular shape in cross-section. The terminal 60 is, therefore, positioned on the contact plate portion 71 of the conductive part 70 while being fitted in the restricting groove 101 of the contact portion 100. The terminal 60 is, hence, pressed against the contact plate portion 32 by the resilient force of the coil spring 82 in a state that its sliding motions relative to the contact plate portion 71 are suppressed as it is positioned on the contact plate portion 71 of the conductive part 70 while being fitted in the restricting groove 101 of the contact portion 100. As a consequence, the state of contact of the terminal 60 to the conductive part 70 has been improved in stability.

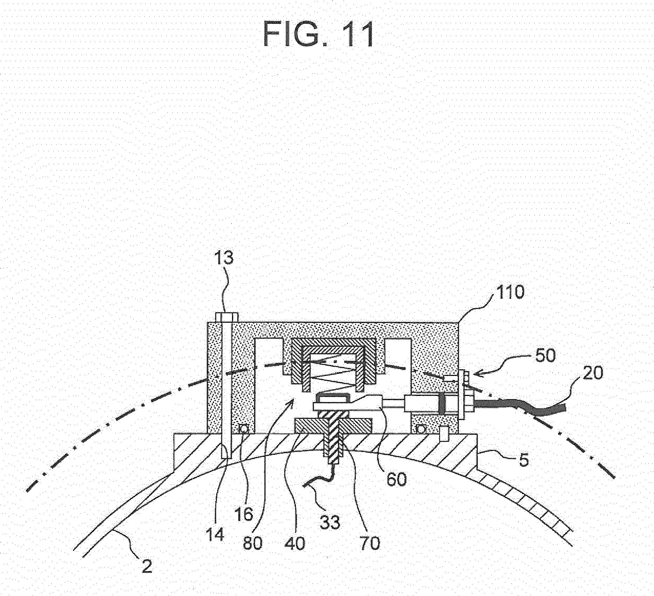

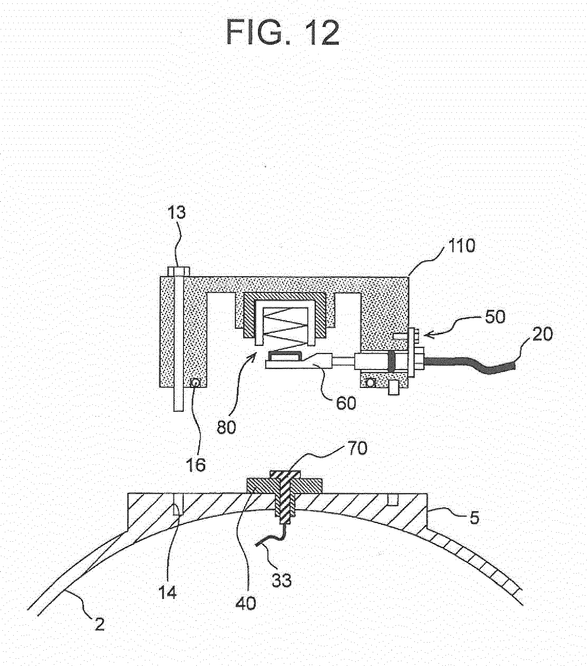

In the above-described electric motor according to the second embodiment, the cover member 10 is provided with the cylinder section 11 and lid section 12. Like a cover member 110 depicted in FIGS. 11 and 12, the cover member may be one having the cylinder section 11 and lid section 12 formed integrally with each other. Such a modification makes it possible to realize an electric motor having a smaller number of parts or components than the electric motor according to the second embodiment.

In the above-described second embodiment, each coil spring 82 is fixed on the lid section 12 via the corresponding spring guide member 83, insulating member 85 and fitting frame 87, because the lid section 12 and spring guide member 83 are each made of a metal for the ease in assuring strength and the insulating member 85 is thus needed between the spring guide member 83 and the lid section 12. When each spring guide member 83 is an insulating member of strength sufficient to perform the guiding of the coil spring 82, the guide member may be fitted directly in the fitting frame 87 of the lid section 82 such that it can be hardly pulled out. When the lid section 12 is an insulating member having sufficient strength, a frame that can perform the function of the spring guide member 83 may be arranged instead of the fitting frame 87 at the position of the fitting frame 87 of the lid section 12. These modifications can each realize an electric motor that requires a smaller number of parts or components for the fixing of the coil springs 82 on the lid section 12 than the electric motor according to the second embodiment.

### Legend

- 1: Electric motor
- 2: Motor casing
- 3: Flange
- 3a: Mounting hole
- 4: Bolt
- 5: Attachment base
- 6: Wiring hole
- 10: Cover member
- 11: Cylinder section
- 12: Lid section
- 13: Bolt
- 14: Internally threaded portion
- 15: Positioning pin
- 16: Seal member
- 20: Electric wire
- 20a: Inner sheath
- 20b: Outer sheath
- 21: Terminal
- 22: Connection screw
- 30: Conductive part
- 31: Conductive, solid cylinder portion
- 32: Contact plate portion
- 33: Electric wire
- 40: Seal member
- 41: Insulating tube portion
- 42: Insulating plate portion
- 50: Wire attachment means
- 51: Tube
- 52: Wiring hole
- 53: O-ring
- 54: Fixing plate
- 55: Screw
- 56: Internally threaded portion
- O: Centerline
- 60: Terminal
- 70: Conductive part
- 80: Pressing means
- 81: Contact portion
- 82: Coil spring (resilient portion)
- 83: Spring guide member
- 84: Guide bore
- 85: Insulating member
- 86: Fitting bore
- 87: Fitting frame
- 91: Contact plate portion
- 92: Concave portion
- 93: Contact portion
- 94: Convex portion
- 100: Contact portion
- 101: Restricting groove
- 110: Cover member

## Claims

1. An electric motor comprising:
a motor casing with an armature accommodated therein,
a flange formed projecting in a rim shape on an outer side wall of the motor casing, and provided with plural portions where the flange can be fastened by screws,
a conductive part electrically connected to the armature, arranged exposed on the outer side wall of the motor casing, and located on a side of a centerline of the motor casing relative to the portions of the flange where the flange can be fastened by the screws,
an electric wire having a terminal at an end thereof, electrically connected at a position of the terminal to the conductive part, and connected at an opposite end thereof to a power supply, and
a cover member detachably attached to the outer side wall of the motor casing while covering the terminal and conductive part which are in an electrically connected state.

2. The electric motor according to claim 1, wherein:
the cover member is provided with a wire attachment means for holding the electric wire in place while assuring air tightness of the cover member and positioning the terminal of the electric wire to come into contact with the conducive part in a state that the cover member is attached to the outer side wall of the motor casing, and also with a pressing means for normally pressing the terminal of the electric wire against the conductive part in the state that the cover member is attached to the outer side wall of the motor casing, and
the pressing means is provided with a contact portion located with the terminal held between the contact portion and the conductive part in the state that the cover member is attached to the outer side wall of the motor casing, and also with a resilient portion fixed at an end thereof on the contact portion and at an opposite end thereof on the cover member for normally pressing the contact portion against the terminal by resilient force.
